**Europäisches Patentamt**

**European Patent Office**

**Office européen des brevets**

(19)

(11) Veröffentlichungsnummer : **0 462 415 B1**

(12)

# EUROPÄISCHE PATENTSCHRIFT

(45) Veröffentlichungstag der Patentschrift :
**07.10.92 Patentblatt 92/41**

(51) Int. Cl.$^5$ : **F16D 51/50**

(21) Anmeldenummer : **91108367.3**

(22) Anmeldetag : **23.05.91**

(54) **Innenbacken-Trommelbremse für auflaufgebremste Anhänger mit Rückfahrautomatik.**

(30) Priorität : **02.06.90 DE 9006266 U**

(43) Veröffentlichungstag der Anmeldung :
**27.12.91 Patentblatt 91/52**

(45) Bekanntmachung des Hinweises auf die
Patenterteilung :
**07.10.92 Patentblatt 92/41**

(84) Benannte Vertragsstaaten :
**DE FR GB IT**

(56) Entgegenhaltungen :
**DE-A- 2 929 960**
**DE-B- 2 248 061**
**DE-B- 2 848 744**
**DE-B- 2 914 468**
**FR-A- 2 222 899**

(73) Patentinhaber : **Knott GmbH**
**Obinger Strasse 15**
**W-8201 Eggstätt (DE)**

(72) Erfinder : **Knott, Valentin**
**Obinger Strasse 15**
**W-8201 Eggstätt (DE)**
Erfinder : **Hofstetter, Hermann**
**Seestrasse 58**
**W-8221 Seeon (DE)**

(74) Vertreter : **Flach, Dieter Rolf Paul, Dipl.-Phys.**
**et al**
**Patentanwälte Andrae/Flach/Haug/Kneissl**
**Prinzregentenstrasse 24**
**W-8200 Rosenheim (DE)**

EP 0 462 415 B1

Jouve, 18, rue Saint-Denis, 75001 PARIS

**Beschreibung**

Die Erfindung betrifft eine Servo-Innenbackenbremse für auflaufgebremste Anhänger mit Rückfahrautomatik nach dem Oberbegriff des Anspruches 1.

Eine gattungsbildende Duo-Servobremse ist aus dem DE-U 85 23 004 bekannt. Eine der beiden Bremsbacken ist zweigeteilt und umfaßt neben einem Bremsbackenträger einen darauf in Umfangs- und Radialrichtung verschiebbaren Belagträger, der bei Rückwärtsdrehrichtung der Bremstrommel im Sinne einer Ausweichbewegung zur Verminderung der Bremskraft nach innen hin abtauchen kann. Der Bremsbelagträger wird über zwei Stützbolzen und damit zusammenwirkenden Gleitflächen zwischen zwei anschlagsbegrenzten Stellungen geführt. Als Zuspanneinrichtung kann eine Spreizvorrichtung oder beispielsweise auch eine Schwimmnocke oder ein Hydraulikzylinder dienen.

Die beiden Bremsbacken sind gegenüberliegend zur Zuspanneinrichtung an einer schwimmend angeordneten bzw. schwimmend Wirkenden Nachstelleinrichtung abgestützt. Anstelle der beschriebenen manuell betätigbaren Nachstelleinrichtung soll aber auch eine automatische Nachstelleinrichtung verwendbar sein, deren Wirkungsweise vor allem im Zusammenspiel mit den übrigen Teilen der Bremse jedoch nicht erläutert ist.

Aufgabe der vorliegenden Erfindung ist es von daher, ausgehend von dem gattungsbildenden Stand der Technik eine Duo-Servo-Innenbackenbremse für auflaufgebremste Anhänger mit Rückfahrautomatik zu schaffen, die bei einem einfachen Aufbau bei höchster Sicherheit stets funktionstüchtig ist, und insbesondere auf die Verwendung einer automatischen Nachstelleinrichtung abgestimmt ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Bei der erfindungsgemäßen Duo-Servo-Innenbackenbremse sind die bei der zweigeteilten Bremsbacke beispielsweise an dem Belagträger ausgebildeten Gleitkurven, die mit entsprechenden Stützbolzen am Bremsbackenträger zusammenwirken, so ausgebildet, daß auch bei Rückwärtsdrehrichtung der Bremstrommel keine Selbsthemmungskräfte auftreten können, die ein Verschwenken des Belagträgers in die für die Rückfahrautomatik wichtige Ausweichstellung behindern können. Dazu ist ein erster Kurvenabschnitt bis zu einem eine Art "Erhöhung" bildenden weiteren Kurvenabschnitt geführt, der im wesentlichen tangential oder um den Mittelpunkt der Bremse bogenförmig gestaltet ist.

Die erste mit dem ersten Stützbolzen und insbesondere die zweite mit dem zweiten Stützbolzen zusammenwirkende Kurvenform ist so ausgebildet, daß auch nach einem Bremsvorgang bei Rückwärtsfahrt die dabei erfolgte Ausweichbewegung des geteilten Bremsbelagträgers keine Nachstellung an der Nachstelleinrichtung auslöst, selbst wenn dort eine Durchschiebebewegung an dem Durchschiebeschloß zur Erzielung der Servowirkung stattfindet. Mit anderen Worten müssen die Gleitkurven so abgestimmt sein, daß bei Rückwärtsfahrt der Durchschiebehub an dieser Nachstelleinrichtung stets so bemessen ist, daß eine Nachstellung bei noch nicht ausreichendem Belagverschleiß unterbleibt, eine Nachstellung also nur bei entsprechendem Belagverschleiß erfolgt.

Erfahrungsgemäß werden bei derartigen Bremsen flach ansteigende Kennlinien gewünscht, um die Bremse von der Funktionsseite her besser zu beherrschen. Dies ist bei der erfindungsgemäßen Auflaufbremse besonders günstig dadurch möglich, daß der Bremsbelagträger mit einer entsprechend geformten Anschlagkontur versehen ist, welche bei Rückwärtsdrehrichtung der Bremstrommel und betätigter Feststellbremse an einem Festanschlag unter Erzeugung einer nach außen gerichteten radialen Kraftkomponente anschlägt. Dadurch kann gerade für den kritischen Fall bei betätigter Feststellbremse für die Aufbringung ausreichender Bremskräfte eine zusätzliche radiale Kraftkomponente erzeugt werden.

Die gewünschte Verminderung der Kennwerte kann durch Zusatzfedern, insbesondere durch Federkrafterhöhung an der Nachstelleinrichtung eingestellt und durch entsprechende Reibbeläge im positiven Sinne beeinflußt werden.

Vorteilhaft wirkt sich in einer bevorzugten Ausführungsform der Erfindung auch aus, daß der Bremsbelagträger bei Rückwärtsdrehrichtung der Bremstrommel, insbesondere wenn die Feststellbremse in Rückwärtsdrehrichtung wirkt, im Sinne einer Kräfteverzweigung sich gleichzeitig einmal direkt und zum anderen zusätzlich mittelbar an einem an einem Bremsteller sitzenden Festanschlag abstützt. Die mittelbare Abstützung erfolgt über einen Stützbolzen und dem Bremsbackenträger, der sich wiederum an dem erwähnten Festanschlag abstützt. Dadurch wird eine Überlastung des Backenträgers verhindert und zum anderen eine Konstruktion ermöglicht, die auf eine entsprechend geringere Belastung ausgelegt sein kann.

Schließlich kann in einer Weiterbildung der Erfindung ein Niederhalteblech für die beiden Bremsbacken so ausgebildet sein, daß das Teil in gleicher Ausführung für die linke wie auch die rechte Bremse verwendbar ist.

Weitere Vorteile, Einzelheiten und Merkmale der Erfindung ergeben sich nachfolgend aus den anhand von Zeichnungen dargestellten Ausführungsbeispielen. Dabei zeigen im einzelnen:

2

Figur 1 : eine schematische Draufsicht auf die erfindungsgemäße Auflaufbremse;

Figur 2 : eine schematische Schnittdarstellung längs der Linie II-II in Figur 1;

Figur 3 : eine auszugsweise Darstellung der zweigeteilten Bremsbacken in ihrer Ausgangsstellung in unbelastetem Zustand bei Vorwärtsdrehrichtung;

Figur 4 : eine Figur 3 entsprechende Darstellung, jedoch bei Rückwärtsdrehrichtung der Bremstrommel;

Figur 5 : eine Abwandlung zu dem Ausführungsbeispiel nach den Figuren 1 bis 4 mit abgewandelter Anschlagkontur des Belagträgers;

Figur 6 : eine weitere Abwandlung bezüglich der Anschlagkontur des Belagträgers;

Figur 7 : eine schematische Darstellung eines Niederhaltebleches.

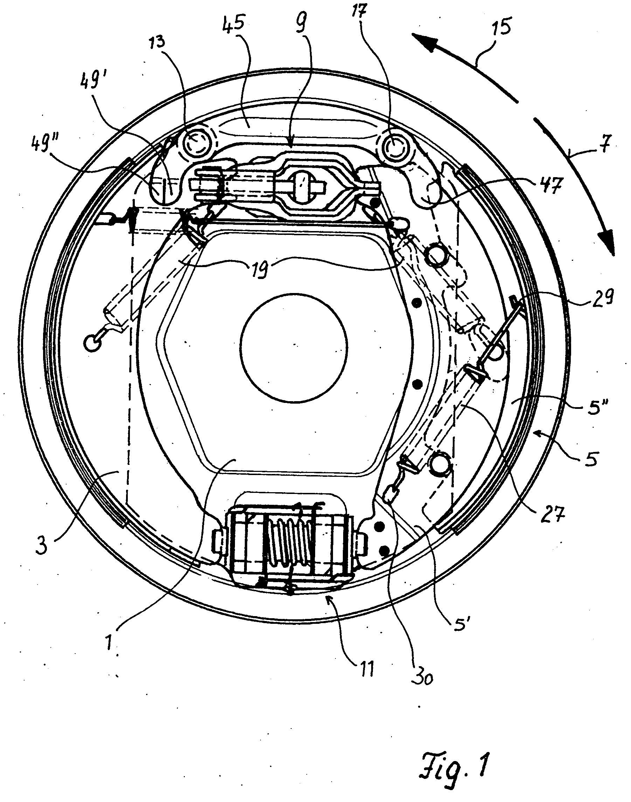

In den Figuren 1 bis 4 ist ein Bremsteller 1 mit zwei Bremsbakken 3 und 5 gezeigt. Die im gezeigten Ausführungsbeispiel in Vorwärtsdrehrichtung 7 der Bremstrommel ablaufende Bremsbacke 5 ist zweigeteilt und umfaßt einen Backenträger 5′ und einen Belagträger 5″.

Zwischen den beiden in den Zeichnungen obenliegenden Enden der Bremsbacken 3 und 5, d.h. zwischen der Bremsbacke 3 und dem Backenträger 5′ wirkt eine Zuspanneinrichtung 9.

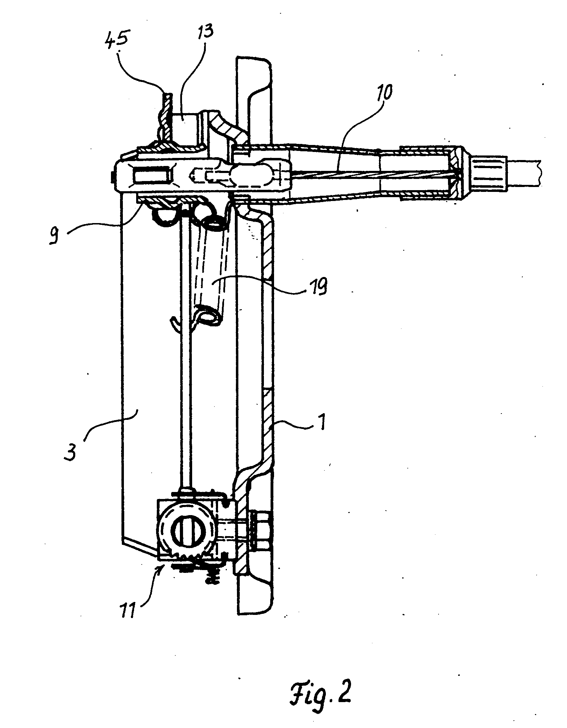

Obgleich in der Zeichnung in Figur 2 für die Zuspanneinrichtung ein über einen Seilzug 10 betätigbarer Spreizhebel dargestellt ist, kann als Betätigungsvarianten ebenso eine Nockenanordnung oder beispielsweise ein hydraulisch betätigbarer Radzylinder vorgesehen sein.

An den jeweils gegenüberliegenden Enden der Bremsbacke 3 und dem Backenträger 5′ ist eine automatische Nachstelleinrichtung 11 vorgesehen, welche ein Durchschiebeschloß derart aufweist, daß zur Erzielung einer Duo-Servowirkung bei betätigter Zuspanneinrichtung 9 bei Vorwärtsdrehrichtung 7 die zweigeteilte Primär-Bremsbacke 5 als ablaufende Bremsbacke wirkt, die sich über das Durchschiebeschloß der automatischen Nachstelleinrichtung 11 an der auflaufenden Sekundär-Bremsbacke 3 abstützt, die sich wiederum an einem oberen bremstellerseitigen Festanschlag 13 abstützt.

Bei Rückwärtsdrehrichtung 15 der nicht näher dargestellten Bremstrommel wirkt die Bremsbacke 3 als ablaufende Primärbacke, die sich über die schwimmende Anordnung des Durchschiebeschlosses der Nachstelleinrichtung 11 auf der zweigeteilten Bremsbacke 5 abstützt, die wiederum auf dem in Figur 1 rechts oben liegenden, im Bereich der Zuspanneinrichtung sitzenden weiteren Festanschlag 17 abgestützt wird. Bezüglich des Aufbaues und der Funktionsweise einer derartigen automatischen Nachstelleinrichtung wird auf die veröffentlichte Gebrauchsmusterschrift DE-U-89 10 474.9 verwiesen.

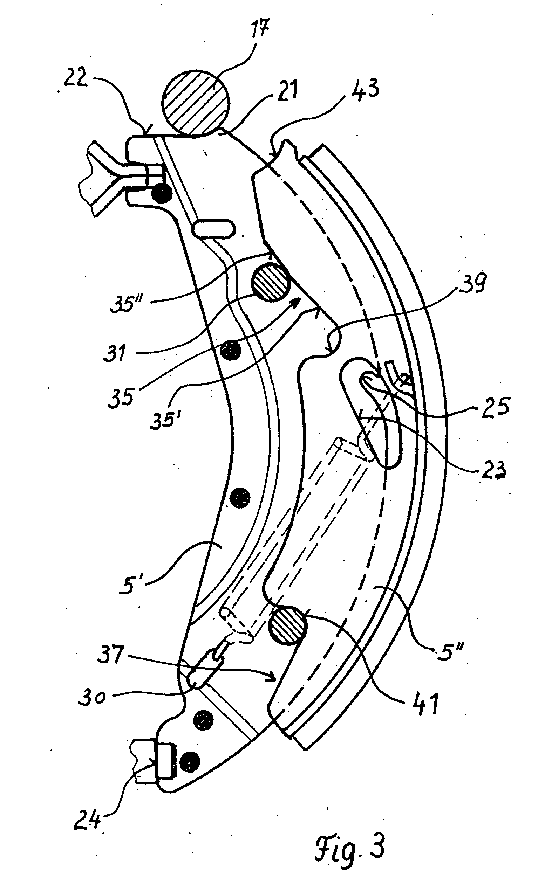

Über in den Zeichnungen dargestellte Federn 19 werden die beiden Bremsbacken 3 und 5 in ihre in Figur 3 dargestellte Ausgangslage vorgespannt gehalten, in der sie unter Anlage an den Festanschlägen 13 und 17 zentriert werden.

Dazu ist an dem Backenträger 5′ und an der Backe 3 eine Anschlagnase 21 ausgebildet, die in der gezeigten Ausführungsform eine konkave Bogenform aufweist, die an die Bolzengröße des Festanschlages 17 bzw. 13 angepaßt ist.

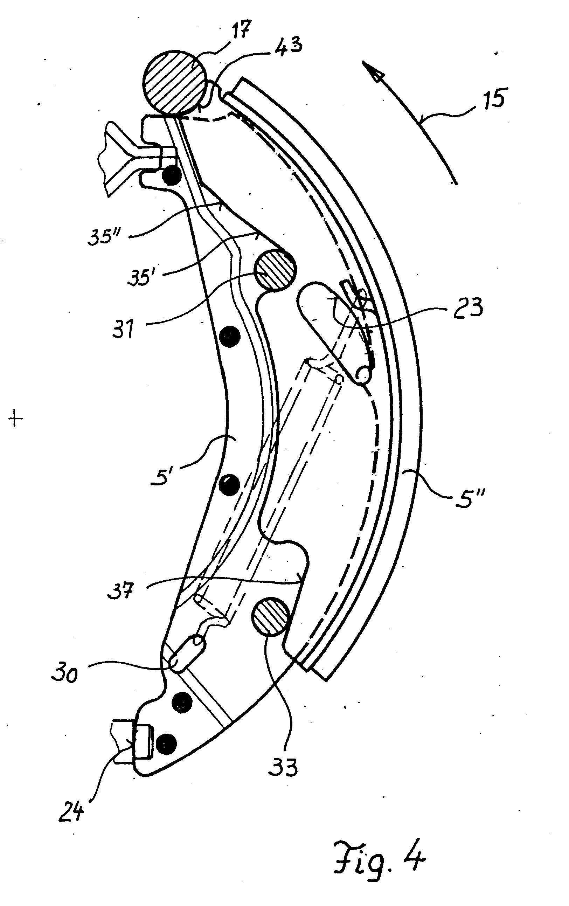

Im gezeigten Ausführungsbeispiel geht insbesondere beim Backenträger 5′ die konkave Bogenform der Anschlagnase 21 in eine leicht konvex bogenförmige Anschlag- und Gleitkurve 22 über, worüber sich der Backenträger 5′ in Radialrichtung im wesentlichen quer zur Betätigungsrichtung der Zuspanneinrichtung 9 an dem bolzenförmigen Festanschlag 17 abstützt. Der Mittelpunkt dieser Bogenform 22 wird durch das untere Abstützende 24 des Backenträgers 5′ gebildet, dessen leicht konvexer Anlageabschnitt in einen entsprechenden Schlitz des Durchschiebeschlosses der automatischen Nachstelleinrichtung 11 eingreift. Durch diese bogenförmige Anschlag- und Gleitkurve 22 ist eine Abstützung des Backenträgers 5′ und zudem ein völlig unbehindertes Ausschwenken des Backenträgers 5 bei Betätigung der Zuspanneinrichtung 9 insbesondere bei Rückwärtsfahrt möglich, ohne daß eine hemmende Kraftkomponente auftritt und der Belagträger 5″ in radialer Richtung ausschwenken kann. In Figur 4 ist die Betätigungsstellung der zweigeteilten Bremsbacke 5 bei Rückwärtsdrehrichtung dargestellt, in welcher die zweigeteilte Bremsbacke 5 um ihr unteres Abstützende 24 nach außen verschwenkt wird, wobei das obere Ende der zweigeteilten Bremsbacke 5 dann längs der Anschlag- und Gleitkurve 22 an dem bolzenförmigen Festanschlag 17 nach rechts vorbei verschwenkt wird.

Die erwähnten Federn 19 greifen mit ihrem einen Federende jeweils an entsprechenden Ausnehmungen im Bremsteller bzw. an entsprechenden Ausnehmungen an der Bremsbacke 3 und dem Backenträger 5′ an. Da der Backenträger 5′ beispielsweise doppelwandig unter Aufnahme eines dazwischen eintauchenden Stegs des Belagträgers 5″ ausgebildet ist, ist in dem Steg des Belagträgers 5″ in geeigneter Lage und Größe eine nierenförmige Ausnehmung 23 eingebracht, um den einen Federhaken der entsprechenden Feder 19 an einem Einhängabschnitt 25 einzuhängen.

Schließlich ist zumindest eine weitere Feder 27 vorgesehen, die mit ihrem einen Ende an einem Einhängabschnitt 29 am Belagträger 5″ und mit ihrem anderen Ende, z. B. an einem Langloch 30 am zugeordneten Backenträger 5′ angreift, um somit den Belagträger in der in Figur 3 dargestellten Ausgangslage anschlagsbegrenzt vorgespannt zu halten.

Zur Bewirkung der Rückfahrautomatik sind zwischen den beiden parallel zueinander liegenden Platten des Backenträgers 5' Stützbolzen 31 und 33 vorgesehen, die mit entsprechenden Gleitkurven 35 und 37 zusammenwirken.

Die obere Gleitkurve 35 geht von einer halbkreisförmigen, einen Anschlag 39 bildenden Ausnehmung in einen gerade verlaufende und gegenüber einer Tangente geneigten ersten Kurvenabschnitt 35' über, der dann in einen eher tangential ausgerichteten zweiten Kurvenabschnitt 35'' übergeht. Im gezeigten Ausführungsbeispiel ist der zweite Kurvenabschnitt als Kreisbogen um den Mittelpunkt der Bremsbacken bzw. des Bremstellers 1 ausgebildet.

Die zweite, d.h. der Nachstelleinrichtung näher liegende untere Gleitkurve 37 geht ebenfalls von einer halbkreisförmigen, einen Anschlag 41 bildenden Ausnehmung im Belagträger 5'' aus und ist gerade gestaltet.

Die Gleitkurven 35 und 37 sind dabei so gebildet, daß zur Vermeidung einer Auflaufbremsung bei Rückwärtsfahrt nunmehr der Belagträger 5'' gegenüber dem Backenträger 5' in Umfangsrichtung unter Erzielung einer nach innen gerichteten radialen Eintauchbewegung so verstellbar ist, daß die Bremswirkung praktisch völlig aufgehoben wird. Um eine Selbsthemmung beim Übergang von Vorwärts- in Rückwärtsdrehrichtung der Bremstrommel, insbesondere auch bei beispielsweise vielleicht leicht betätigter Zuspanneinrichtung 9, zu vermeiden, ist vorgesehen, daß der der Zuspanneinrichtung 9 näherliegende Stützbolzen 31 gerade noch auf dem zweiten Kurvenabschnitt 35'' oberhalb des höchsten Punktes nach der Gleitkurve 35' in seiner Ausgangsstellung anliegt.

Diese Abstützstelle liegt beispielsweise in dem Abstand von 1 mm, vorzugsweise 0.5 mm benachbart zum Ende des ersten geraden Kurvenabschnittes 35'. Bei Rückwärtsdrehrichtung wird von daher der Belagträger 5'' sofort nach geringfügigster Radialbewegung des Belagträgers 5'' freigegeben und kann mit seinem ersten Kurvenabschnitt 35' an dem Stützbolzen 31 unter Erzielung der Funktion der Rückfahrautomatik längsgleiten.

Das Aufliegen des Stützbolzens 31 auf dem Kurvenabschnitt 35'' verhindert bei entsprechend hohen Zuspannkräften in Vorwärtsdrehrichtung der Bremstrommel eine ungewollte Radialbewegung des Belagträgers 5'' in Rückwärtsdrehrichtung und somit die Funktion der Rückfahrautomatik.

In der in Figur 3 dargestellten Ausgangsstellung wird die Abstützlage des oberen Stützbolzens 31 gerade noch auf dem zweiten Kurvenabschnitt 35'' hinter dem "höchsten Punkt" am Übergang vom zweiten zum ersten Kurvenabschnitt 35' zu 35'' durch die Kraft der Feder 27 in Richtung der anschlagbegrenzten Stellung des Belagträgers 5'' am unteren Stützbolzen 33 stabil gehalten.

Um eine materialsparende Konstruktion zu ermöglichen, ist - wie aus Figur 4 hervorgeht - die Anordnung derart, daß bei Rückwärtsdrehrichtung 15 der Bremstrommel und betätigter Feststellbremse der Belagträger 5'' mit einer nach oben weisenden Anschlagkontur 43 an dem zugeordneten bolzenförmigen Festanschlag 17 anschlägt, worüber sich der Belagträger 5'' bremstellerseitig abstützen kann. Genau in dieser Anschlagstellung aber berührt auch der obere Stützbolzen 31 den entsprechenden Anschlag 39, so daß der Belagträger 5'' auch hierüber zunächst mittelbar am Bakkenträger 5' abgestützt ist, der ebenfalls wiederum an dem gleichen Festanschlag 13 anliegt. Damit ergibt sich eine kräfteverzweigende Abstützung.

In der Ausführungsform gemäß den Figuren 1 bis 4 ist die Anschlagkontur 43 an die bolzenförmige Außenkontur des Festanschlages 17 angepaßt.

Bekanntermaßen werden bei Servo-Bremsen als Auflaufbremsen solche mit einem Kennlinienbereich mit geringer Steigung bevorzugt, um die Gefahr einer Selbstblockierung bei starker Bremsung stets sicher zu vermeiden. Dies kann bevorzugt durch entsprechende Wahl der in den Zeichnungen dargestellten und beschriebenen Federn 19 und 27 sowie insbesondere durch Federkraftauslegung an der Nachstellung und durch geeignete Beläge erfolgen. Dies hätte aber grundsätzlich gegebenenfalls nachteilige Auswirkungen bei Betätigung der Feststellbremse, da ja in geparktem Zustand über die Feststellbremse und einen hierfür stets vorgesehenen, in den Zeichnungen ebenfalls nicht dargestellten, Kraftspeicher ausreichende Kraftmomente zur Verfügung gestellt werden müssen, um auch den abgestellten Anhänger bei abschüssiger Hanglage in Rückwärtsfahrtrichtung stets sicher zu parken.

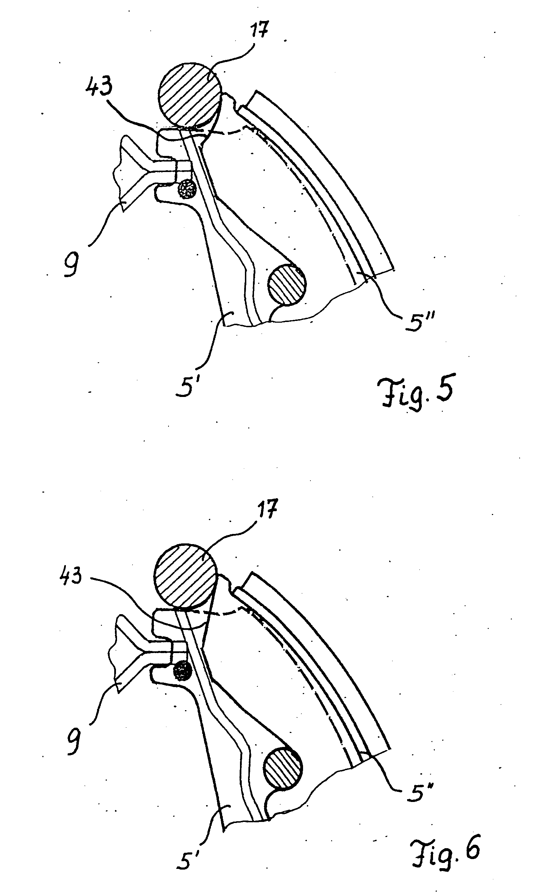

In diesem Falle kann zur Erhöhung der Feststellbremswirkung gemäß dem Ausführungsbeispiel nach Figur 5 eine abgeänderte Anschlagkontur 43 für den Belagträger 5'' vorgesehen sein, die sich zu dem Ausführungsbeispiel nach den Figuren 1 bis 4 dadurch unterscheidet, daß die konkave bogenförmige Anschlagkontur 43 größer und nach unten so verschoben ist, daß beim Auflaufen der Anschlagkontur 43 an dem bolzenförmigen Festanschlag 17 eine nach außen gerichtete radiale Kraftkomponente zusätzlich erzeugt wird.

Bei der Ausführungsform gemäß Figur 6 wird das gleiche Prinzip dadurch erzielt, daß die Anschlagkontur 43 mit einer keilförmigen geraden Auflauffläche ausgebildet ist, worüber ebenfalls eine nach außen gerichtete Kraftkomponente bei Betätigung einer Feststellbremse in Rückwärtsdrehrichtung der Bremstrommel erzeugt wird.

Um eine Überbelastung zu verhindern, kann in beiden Ausführungsformen der Anschlag 39 so gesetzt werden, daß eine Begrenzung der Radialbewegung des Belagträgers 5'' erreicht wird, um die erzeugten Radialkräfte zu begrenzen.

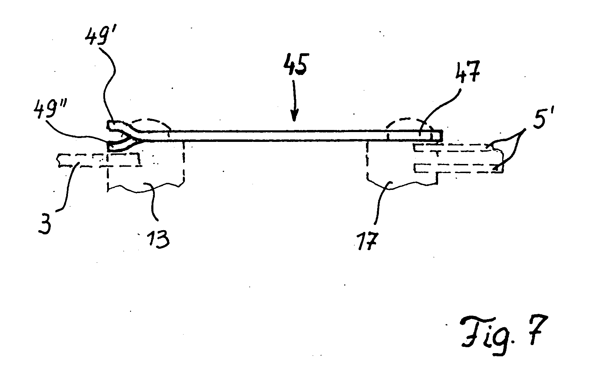

In Figur 7 ist noch ein Niederhalteblech 45 quer zur Draufsicht gemäß Figur 1 gezeigt. Bereits aus Figur 1 ist ersichtlich, daß das Niederhalteblech 45 an seiner einen Seite keinen einteiligen Haltefinger 47, sondern einen gabelförmig nach oben wie nach unten gekröpft und versetzt liegenden Haltefinger 49′ und 49″ aufweist. Dadurch ist es möglich, dieses über Schrauben oder durch Vernietung anbringbare Niederhalteblech gleichermaßen zur Sicherung der Bremsbacken für eine linke wie rechte Bremse zu verwenden.

Das gezeigte Ausführungsbeispiel wurde für den Fall erläutert, daß die zweigeteilte Bremsbacke in Vorwärtsdrehrichtung als Primärbacke wirksam ist, die einer geringeren Belastung ausgesetzt ist. Grundsätzlich kann die Anordnung natürlich auch umgekehrt sein. Schließlich kann auch anstelle der automatischen Nachstelleinrichtung grundsätzlich auch eine manuelle Nachstelleinrichtung oder auch nur eine Nachstelleinrichtung eingesetzt werden, die nur in einer Durchschubrichtung vorzugsweise auf der Sekundärbacke eine automatische Nachstellung erlaubt.

Grundsätzlich sind vielfältige Abwandlungen möglich. So können beispielsweise die Stützbolzen 31 und 33 an einem doppelwandigen Belagträger 5″ und die Gleitkurven an einem nur mit einem Steg zwischen die doppelwandige Ausführung des Belagträgers 5″ eintauchenden Backenträgers 5′ ausgebildet sein oder es kann sogar der eine Stützbolzen am Backenträger 5″ und der andere Stützbolzen am Belagträger 5″ und die Gleitkurven jeweils umgekehrt am anderen Bauteil ausgebildet sein.

Abweichend vom bezeigten Ausführungsbeispiel kann die Anordnung auch derart sein, daß die Nachstelleinrichtung nur einseitig wirkt. In diesem Falle ist die Anordnung bevorzugt derart, daß eine Nachstellung nur bezüglich der stärker beanspruchten Backe erfolgt. Da üblicherweise in Vorwärtsdrehrichtung die Abnutzung der Bremsbeläge stärker ist und in diesem Falle die auflaufende einteilige Primärbacke stärker beansprucht wird, sollte die automatische Nachstelleinrichtung in dieser Richtung wirken.

Grundsätzlich kann natürlich auch anstelle einer automatischen Nachstelleinrichtung jederzeit eine manuelle eingesetzt werden. Besonders vorteilhaft ist vor allem auch, daß zur Erzielung einer normalen Servo- oder auch Duo-Servo-Bremse jederzeit die zweiteilige Bremsbacke 5 durch eine einteilige ersetzt werden kann, so daß in diesem Falle durch Austauschen allein dieser Bremsbacke die Bremse von einer Auflaufbremse zu einer normalen Servo- und insbesondere Duo-Servo-Bremse geändert werden kann. Durch den ansonsten gleichen Aufbau ergeben sich auch konstruktive Vereinfachungen und Kostenvergünstigungen auch in der Lagerhaltung.

Schließlich können für die automatische Nachstelleinrichtung auch völlig andere konstruktive Nachstelleinrichtungen verwandt werden, auch wenn diese nicht mit einem Durchschiebeschloß arbeiten.

## Patentansprüche

1. Servo-Innenbackenbremse für auflaufgebremste Anhänger mit Rückfahrautomatik, mit zwei Bremsbacken (3, 5), die mittels einer schwimmend angeordneten Zuspanneinrichtung (9) betätigbar sind, und die an ihrem gegenüberliegenden Ende mittels einer automatischen Nachstelleinrichtung (11) vorzugsweise nach Art eines Durchschiebeschlosses in Wirkverbindung stehen, über die zumindest in einer Drehrichtung der Bremstrommel die eine Bremsbacke (3, 5) als ablaufende Bremsbacke sich an der anderen Bremsbacke (5, 3) als auflaufende Bremsbacke abstützt, der in dieser zumindest einen Drehrichtung ein Festanschlag (13, 17) vorzugsweise in dem der Zuspanneinrichtung (9) zugeordneten Endbereich der Bremsbacke (3, 5) zugeordnet ist, wobei zumindest eine Bremsbacke (5) zweigeteilt ist und einen Backenträger (5′) und einen darauf über zwei Gleitkurven (35, 37) und jeweils einen anliegenden Stützbolzen (31, 33) mit einer Radial- und einer Umfangskomponente anschlagsbegrenzt verschieblich gelagerten Belagträger (5″) umfaßt, so daß zur Erzielung einer Rückfahrautomatik bei Rückwärtsdrehrichtung (15) der Bremstrommel der Belagträger (5″) entgegengesetzt zum Betätigungshub der Zuspanneinrichtung (9) über einen vorbestimmten Weg zur wesentlichen Verringerung des Rückwärtsbremsmomentes mit nach innen gerichteter Radialkomponente ausweichen kann, **dadurch gekennzeichnet,** daß die der Zuspanneinrichtung (9) näherliegende Gleitkurve (35) zumindest zweigegliedert ist und am Ende des eine Ausweichbewegung des Belagträgers (5″) in Umfangs- und mit nach innen gerichteter Radialrichtung ermöglichenden Kurvenabschnittes (35′) in einen etwa parallel zur tangentialen Verschiebungsrichtung des Belagträgers (5″) ausgerichteten weiteren Kurvenabschnitt (35″) übergeht, wobei in der federvorgespannten Ausgangsstellung der zugeordnete Stützbolzen (31) gerade über dem Endbereich des ersten Kurvenabschnittes (35′) benachbart auf dem zweiten Kurvenabschnitt (35″) anliegt, und daß auch die der automatischen Nachstelleinrichtung (11) näher liegende Gleitkurve (37) so verläuft, daß bei Rückwärtsdrehrichtung (15) der Bremstrommel die Ausweichbewegung des Backenträgers (5′) an seinem Abstützende (24) an der automatischen Nachstelleinrichtung (11) erst dann größer wird als der für eine Nachstellung notwendige minimale Durchschiebehub, wenn eine belagverschleißabhängige Nachstellung erforderlich wird.

2. Servo-Innenbackenbremse nach Anspruch 1, **dadurch gekennzeichnet,** daß der Abstand zwischen der Abstützstelle des Stützbolzens (31) an dem zweiten Kurvenabschnitt (35″) zum beginnenden benachbarten ersten Kurvenabschnitt (35′) in der Ausgangsstellung kleiner als 1 mm, vorzugsweise kleiner als 0,5 mm ist.

3. Servo-Innenbackenbremse nach Anspruch 1 oder 2, **dadurch gekennzeichnet,** daß der zweite Kurvenabschnitt (35″) als Bogenabschnitt mit zum Mittelpunkt der Bremsbacken (3, 5) bzw. des Bremstellers (1) konzentrischen Mittelpunkt ausgebildet ist.

4. Servo-Innenbackenbremse nach einem der Ansprüche 1 bis 3, **dadurch gekennzeichnet,** daß die der automatischen Nachstelleinrichtung (11) näherliegende Gleitkurve (37) von einer eine Anschlagbegrenzung (41) bildenden Ausnehmung gerade verläuft und mit der Betätigungsrichtung der Zuspanneinrichtung (9) lageabhängig ein Winkel von 40° bis 85°, insbesondere 50° bis 70°, vorzugsweise 45° oder 65° oder 60° bis 70° oder 65°, insbesondere um 61° bis 63° beträgt.

5. Servo-Innenbackenbremse nach einem der Ansprüche 1 bis 4, **dadurch gekennzeichnet,** daß der bei Rückwärtsdrehrichtung (15) der Bremstrommel für die zweigeteilte Bremsbacke (5) wirksame Festanschlag (17) auch als Anschlagbegrenzung für den auf dem Backenträger (5′) zur Erzielung der Rückfahrautomatik ausweichbar gelagerten Belagträger (5″) dient.

6. Servo-Innenbackenbremse nach Anspruch 5, **dadurch gekennzeichnet,** daß bei Rückwärtsdrehrichtung (15) der Bremstrommel und bei Betätigung der Feststellbremse der Belagträger (5″) sowohl direkt als auch gleichzeitig über eine Anschlagbegrenzung (39) über den zugehörigen Stützbolzen (31) und den Backenträger (5′) mittelbar am Festanschlag (17) abgestützt ist.

7. Servo-Innenbackenbremse nach einem der Ansprüche 1 bis 6, **dadurch gekennzeichnet,** daß der Belagträger (5″) mit einer Anschlagkontur (43) versehen ist, der an die Außenkontur des damit zusammenwirkenden Festanschlags (17) angepaßt ist.

8. Servo-Innenbackenbremse nach Anspruch 7, **dadurch gekennzeichnet,** daß der Festanschlag (17) aus einem Anschlagbolzen und die Anschlagkontur (43) aus einem konkaven Bogenabschnitt besteht.

9. Servo-Innenbackenbremse nach einem der Ansprüche 1 bis 6, **dadurch gekennzeichnet,** daß die Anschlagkontur (43) bogenförmig, vorzugsweise in einem konkaven Bogenabschnitt bis hin zu einer geraden Konturführung derart gestaltet ist, daß bei Rückwärtsdrehung (15) der Bremstrommel und bei betätigter Feststellbremse durch Zusammenwirkung mit dem Festanschlag (17) eine nach außen gerichtete radiale Kraftkomponente auf den Belagträger (5″) erzeugt wird.

10. Servo-Innenbackenbremse nach Anspruch 9, **dadurch gekennzeichnet,** daß ferner durch einen Anschlag (39) zwischen dem Belagträger (5″) und dem Backenträger (5′) die durch Zusammenwirken der Anschlagkontur (43) mit dem Festanschlag (17) erzeugte, die Bremskraft zusätzlich erhöhende Kraftkomponente beschränkt ist.

11. Servo-Innenbackenbremse nach einem der Ansprüche 1 bis 10, **dadurch gekennzeichnet,** daß beide Festanschläge (13, 17) als Zentrieranschläge für die beiden Bremsbacken (3, 5) im unbelasteten Zustand dienen.

12. Servo-Innenbackenbremse nach Anspruch 11, **dadurch gekenn**zeichnet, daß der Zentrieranschlag als Anschlagnase (21) am Backenträger (5′) und an der Backe (3) ausgebildet ist.

13. Servo-Innenbackenbremse nach einem der Ansprüche 1 bis 12, **dadurch gekennzeichnet,** daß an den zweigeteilten Bremsbacken (5) an dem Backenträger (5′) eine Anschlag- und Gleitkurve (22) mit im wesentlichen zur Bewegungsrichtung der Zuspanneinrichtung (9) paralleler Ausrichtung vorgesehen ist, worüber die zweigeteilte Bremsbacke (5) im wesentlichen quer zur Betätigungsrichtung der Zuspanneinrichtung (9) in radialer Außenrichtung abgestützt ist.

14. Servo-Innenbackenbremse nach Anspruch 13, **dadurch gekennzeichnet,** daß die Anschlag- und Gleitkurve (22) als konvexer Bogenabschnitt ausgebildet ist.

15. Servo-Innenbackenbremse nach Anspruch 14, **dadurch gekennzeichnet,** daß der Mittelpunkt des Bogenabschnittes durch das untere Abstützende (24) des Belagträgers (5′) an der automatischen Nachstelleinrichtung (11) gebildet ist.

16. Servo-Innenbackenbremse nach einem der Ansprüche 1 bis 15, **dadurch gekennzeichnet,** daß ferner ein Niederhalteblech (45) zur Fixierung der beiden Bremsbacken (3, 5) vorgesehen ist, welches an einem Ende in zum Bremsteller (1) paralleler Betrachtungsweise in zwei Ebenen gabelförmig unter Bildung zweier versetzt liegender Haltefinger (49′, 49″) ausgebildet ist.

## Claims

1. Power-assisted inside shoe brake for trailers with overrun brakes and automatic brake release for reversing, having two brake shoes (3, 5) which are applied by means of a clamping mechanism (9) arranged in a floating manner and which are, at their opposing end, in operating connection with each other by means of an automatic adjusting device (11) preferably of a push-through lock type, over which - at least in one rotational direction of the brake drum - one of the brake shoes (3, 5) as a running down shoe rests against the other shoe (5, 3) as a running up shoe and which has a fixed stop (13, 17) associated thereto, preferably in the terminal area of the brake shoe (3, 5) associated with the clamping device (9) in the at least one rotational direction, at least one of the brake shoes (5) being bisected and comprising a shoe carrier (5′) and a lining carrier (5″) which has a sliding range delimited by stops and which is supported by two sliding curves (35, 37) and one adjoining support pin (31, 33) each, said support pins (31, 33) having a radial and a circumferential component, so that for achieving an automatic brake release for reversing in a rearward rotational direction of the brake drum the lining carrier (5″) can diverge with an inwardly directed radial component along a predetermined path in the opposite direction of the actuating stroke of the clamping mechanism (9) for a significant reduction of the reverse brake torque, characterized in that the sliding curve (35) nearer to the clamping mechanism (9) is at least bisected and merges at the end of the curve section enabling a diverging movement of the lining carrier (5″) in the circumferential and inwardly directed radial directions into a further curve section (35″) extending approximately parallel to the tangential direction of divergence of the carrier liner (5″), with the respective support pin (31) just above the terminal area of the first curve section (35′) resting against the adjoining second curve section (35″) in the spring-loaded starting position, and in that the sliding curve (37) nearer to the automatic adjusting device (11) runs in such a way that in the rearward rotational direction (15) of the brake drum, the diverging movement of the carrier liner (5′) at its support end (24) against the automatic adjusting device (11) will exceed the minimal push-through lift necessary for an adjustment only when an adjustment necessary due to lining wear is required.

2. Power-assisted inside shoe brake according to Claim 1, characterized in that the distance between the resting point of the support pin (31) against the second curve section (35″) and the start of the adjoining first curve section (35′) is less than 1 mm in the starting position, preferably less than 0.5 mm.

3. Power-assisted inside shoe brake according to Claim 1 or 2, characterized in that the second curve section (35″) is formed as an arc section, the center of which is concentric to the center of the brake shoes (3, 5) or the brake plate (1).

4. Power-assisted inside shoe brake according to Claims 1 to 3, characterized in that the sliding curve (37) nearer to the automatic adjusting device (11) extends linear from a recess forming a stop (41) and forms an angle with the clamping mechanism (9), the position of which is dependent on the direction of application of the clamping mechanism (9) of 40 to 85 degrees, particularly of 45 to 65 or 60 to 70 or 65, particularly of 61 to 63.

5. Power-assisted inside shoe brake according to Claims 1 to 4, characterized in that the fixed stop (17) active during the reverse rotational direction (15) of the brake drum for the bisected brake shoe (5) serves also as a stop for the lining carrier (5″) mounted on the shoe carrier (5′) in a way capable of diverging so as to achieve the automatic brake release for reversing.

6. Power-assisted inside shoe brake according to Claim 5, characterized in that during movement of the brake drum in the reverse rotational direction (15) and while the parking brake is being applied, the lining carrier (5″) rests against the fixed stop (17) directly and at the same time indirectly via a stop (39) via the respective support pin (31) and the shoe carrier (5′).

**7.** Power-assisted inside shoe brake according to Claims 1 to 6, characterized in that the lining carrier (5″) is provided with a stop contour (43) adapted to the exterior contour of the fixed stop (17) and interacting therewith.

**8.** Power-assisted inside shoe brake according to Claim 7, characterized in that the fixed stop (17) consists of a stop bolt and that the stop contour (43) consists of a concave arc section.

**9.** Power-assisted inside shoe brake according to Claims 1 to 6, characterized in that the stop contour (43) is arc-shaped, preferably as a concave arc section leading to a linear contour in such a way that by the interaction with the fixed stop (17) an outwardly directed radial force component onto the lining carrier (5″) is generated during the reverse rotation (15) of the brake drum and while the parking brake is being applied.

**10.** Power-assisted inside shoe brake according to Claim 9, characterized in that the force component generated by the stop contour (43) interacting with the fixed stop (17), which increases the strength of the braking force, is limited by a stop (39) between the lining carrier (5″) and the shoe carrier (5′).

**11.** Power-assisted inside shoe brake according to Claims 1 to 10, characterized in that both fixed stops (13, 17) serve as centring stops for both brake shoes (3, 5) in an unloaded condition.

**12.** Power-assisted inside shoe brake according to Claim 11, characterized in that the centring stop is formed as a stop cam (21) at the shoe carrier (5′) and at the shoe (3).

**13.** Power-assisted inside shoe brake according to any one of Claims 1 to 12, characterized in that at the bisected brake shoes (5) on the shoe carrier (5′), a stop and sliding curve (22) is provided which is aligned essentially parallel to the moving direction of the clamping mechanism (9), above which the bisected brake shoe (5) rests in a radial outward direction essentially perpendicular to the actuating direction of the clamping mechanism (9).

**14.** Power-assisted inside shoe brake according to Claim 13, characterized in that the stop and sliding curve (22) is formed as a convex arc section.

**15.** Power-assisted inside shoe brake according to Claim 14, characterized in that the centre point of the arc section is formed by the bottom support end (24) of the lining carrier (5′) against the automatic adjusting device (11).

**16.** Power-assisted inside shoe brake according to Claims 1 to 15, characterized in that furthermore a hold down sheet (45) is provided to fix the two brake shoes (3, 5), which is formed fork-like on two levels thus forming two holding prongs (49′,49″) at one end if viewed parallel to the brake plate (1), said holding prongs being offset relative to each other.

## Revendications

**1.** Frein à mâchoires intérieures pour remorque de véhicule munie d'un frein d'approche avec retour de course automatique comportant deux mâchoires de frein (3, 5) qui peuvent être actionnées au moyen d'un dispositif de serrage (9) à montage flottant et qui sont en liaison fonctionnelle par leurs extrémités opposées au moyen d'un organe de réglage automatique (11), de préférence à la manière d'une serrure à coulissement par l'intermédiaire duquel une mâchoire de frein (3, 5) prend appui au moins dans un sens de rotation du tambour de frein comme mâchoire de frein d'écartement sur l'autre mâchoire de frein (5, 3) servant de mâchoire d'approche, à laquelle correspond au moins dans ce sens de rotation, une butée fixe (13, 17) montée, de préférence, dans la zone terminale de la mâchoire de frein (3, 5) correspondant au dispositif de freinage (9), tandis qu'au moins une mâchoire de frein (5) est réalisée en deux pièces et comprend un support de mâchoire (5′) et un support de garniture (5″) monté à coulisse limité par butée sur deux courbes de glissement (35, 37) et un boulon de support d'appui (31, 33) avec une composante périphérique et une composante radiale, si bien que,pour obtenir un retour de course automatique en cas de sens de rotation inversé (15) du tambour de frein, le support de garniture 5″ peut s'effacer à l'opposé de la course d'actionnement du dispositif de serrage (9) sur une distance prédéterminée afin de diminuer de manière notable le moment de freinage inversé avec une composante radiale tournée vers l'intérieur, caractérisé en ce que la courbe de glissement (35) située la plus près du dispositif de serrage (9) est formée d'au moins deux éléments et se continue à la fin d'une section de courbe (35′) permettant un mouvement d'effacement du support de garniture (5″) en direction périphérique et en direction radiale tournée vers l'intérieur, par une autre section de courbe (35″) orientée à peu près parallèlement à la direction de coulissement tangentiel du support de garniture 5″, tandis qu'en position initiale précontrainte par ressort, le boulon de support correspondant (31) prend appui par la zone terminale de la première section de courbe (35) proche de la deuxième section de courbe (35″) et en ce que également la courbe de glissement (37) située le plus près de l'organe de réglage automatique (11) est disposée de façon à ce qu'en cas de sens de rotation inversé (15) du tambour de frein, le mouvement d'effacement du support de mâchoire (5′) à son extrémité d'appui (24) sur l'organe de réglage automatique (11) est tout d'abord plus important que la course de coulissement minimale nécessaire pour un réglage si un réglage dépendant de l'usure des garnitures est indispensable.

2. Frein à tambour à mâchoires intérieures selon la revendication 1, caractérisé en ce que la distance entre le point d'appui du boulon de support (31) sur la deuxième section de courbe (35″) vers la première section de courbe (35) voisine et commençante est inférieure à 1 mm et, de préférence, inférieure à 0,5 mm en position initiale.

3. Frein à tambour à mâchoires intérieures selon la revendication 1 ou 2, caractérisé en ce que la deuxième section de courbe (35″) se présente sous forme d'une section d'arc avec un centre concentrique par rapport au point central des mâchoires de frein (3, 5) ou plateau de frein (1).

4. Frein à tambour à mâchoires intérieures selon l'une des revendications 1 à 3, caractérisé en ce que la courbe de glissement (37) la plus proche de l'organe de réglage automatique (11) part d'une cavité formant une limite à butée (41) et se continue ensuite en ligne droite en formant avec la direction de commande du dispositif de serrage (9) en fonction de la position un angle de 40 à 85° et, en particulier, de 50 à 70° et, de préférence, de 45 ou de 65° ou de 60° à 70° ou de 65° et, en particulier, de 61 à 63°.

5. Frein à tambour à mâchoires inférieures selon l'une des revendications 1 à 4, caractérisé en ce que la butée fixe (17) agissant en cas de sens de rotation inversé (15) du tambour de frein pour la mâchoire de frein (5) divisé en deux pièces sert également comme limite de butée pour le support de garniture 5″ monté sur le support de mâchoire 5′ et pouvant s'effacer afin de permettre un retour de course automatique.

6. Frein à tambour à mâchoires inférieures selon la revendication 5, caractérisé en ce que, en cas de sens de rotation inversée (15) du tambour de frein et en cas d'actionnement du frein de blocage, le support de garniture 5″ est supporté directement et également simultanément indirectement sur la butée fixée (17) par l'intermédiaire d'une limite à butée (39) par le boulon de support correspondant (31) et le support de mâchoires (5′).

7. Frein à tambour à mâchoires intérieures selon l'une des revendications 1 à 6, caractérisé en ce que le support de garniture (5″) comporte un profil de butée (43) qui est adapté au profil extérieur de la butée fixe (17) coopérant avec celui-ci.

8. Frein à tambour à mâchoires intérieures selon la revendication 7, caractérisé en ce que la butée fixe (17) est constituée d'un boulon de butée et d'un profil de butée (43) formé d'une section d'arc concave.

9. Frein à tambour à mâchoires intérieures selon l'une des revendications 1 à 6 caractérisé en ce que le profil de butée (43) a une forme en arc avec, de préférence, une section d'arc concave jusqu'à un guide de profil en ligne droite et qui est disposée de façon à ce que, en cas de rotation inversée (15) du tambour de frein et en cas d'actionnement du frein de blocage, une composante de forces radiales tournées vers l'extérieur est créée sur le support de garniture (5″) en coopération avec la butée fixe (17).

10. Frein à tambour à mâchoires intérieures selon la revendication 1 à 9, caractérisé en ce que la composante de forces augmentant en outre la force de freinage et créée par la coopération du profil de butée (43) avec la butée fixe (17) est limitée en outre par une butée (39) entre le support de garniture (5″) et le support de mâchoires (5′);

11. Frein à tambour à mâchoires intérieures selon l'une des revendications 1 à 10, caractérisé en ce que les deux butées fixes (13, 17) servent de butée de centrage pour les deux mâchoires de frein (3, 5) à l'état non chargé.

12. Frein à tambour à mâchoires intérieures selon la revendication 11, caractérisé en ce que la butée de centrage se présente sous forme d'un ergot de butée (21) sur le support de mâchoire (5′) et sur la mâchoire (3).

13. Frein à tambour à mâchoires intérieures selon l'une des revendications 1 à 12, caractérisé en ce qu'il est prévu sur la mâchoire de frein en deux pièces (5) sur le support de mâchoire (5′), une courbe de butée et de glissement (22) avec disposition essentiellement parallèle à la direction de déplacement du dispositif de serrage (9) par l'intermédiaire de laquelle la deuxième mâchoire de frein (5) divisée en deux pièces est supportée en direction radiale vers l'extérieur essentiellement transversalement par rapport à la direction de commande du dispositif de serrage (9).

14. Frein à tambour à mâchoires intérieures selon la revendication 13, caractérisé en ce que la courbe de butée et de glissement (22) a une forme en section d'arc convexe.

15. Frein à tambour à mâchoires intérieures selon la revendication 14, caractérisé en ce que le point central de la section d'arc est formé par l'extrémité d'appui inférieure (24) du support de garniture (5′) sur l'organe de réglage automatique (11).

16. Frein à tambour à mâchoires intérieures selon l'une des revendications 1 à 4, caractérisé en ce qu'il est prévu en outre une tôle serre-flanc (45) pour fixer les deux mâchoires de frein (3, 5), cette tôle étant divisée en deux plans en forme de fourche à une extrémité dans la direction parallèle au plateau de frein (1) en formant deux doigts de maintien (49′, 49″) décalés l'un par rapport à l'autre.

Fig. 1

Fig. 2

Fig. 3

Fig. 4

Fig. 5

Fig. 6

Fig. 7